# EUROPÄISCHE PATENTANMELDUNG

(11) **EP 3 150 784 A1**
(43) Veröffentlichungstag der Anmeldung: **05.04.2017**
(21) Anmeldenummer: 16190531.0
(22) Anmeldetag: 26.09.2016
(51) Int. Cl.: E05B 47/00, G05B 11/28, H02P 7/00

(54) **TÜRSCHLOSSANTRIEBSVORRICHTUNG**

(30) Priorität: 29.09.2015 DE 102015116466
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Eine Türschlossantriebsvorrichtung für ein Türschloss einer Haus- oder Wohnungstür umfasst ein drehbares Ausgangselement zum Ankoppeln an ein Eingangselement des Türschlosses und einen Elektromotor zum Antreiben des Ausgangselements zu einer Drehbewegung. Eine Steuereinrichtung der Türschlossantriebsvorrichtung ist dazu angepasst, den Elektromotor zu einer Antriebsfahrt anzusteuern. Die Türschlossantriebsvorrichtung weist eine Sensoranordnung zum Erfassen eines Drehgeschwindigkeits-Istwerts auf, der eine aktuelle Drehgeschwindigkeit des Ausgangselements repräsentiert, wobei die Steuereinrichtung ferner dazu angepasst ist, während einer Antriebsfahrt des Elektromotors den erfassten Drehgeschwindigkeits-Istwert mit einem gespeicherten Drehgeschwindigkeits-Sollwert zu vergleichen und im Falle einer Abweichung die Ansteuerung des Elektromotors in Abhängigkeit von der Höhe der Abweichung anzupassen.

## Beschreibung

Die vorliegende Erfindung betrifft eine Türschlossantriebsvorrichtung für ein Türschloss einer Haus- oder Wohnungstür. Die Türschlossantriebsvorrichtung umfasst ein drehbares Ausgangselement zum Ankoppeln an ein Eingangselement des Türschlosses. Ferner ist ein Elektromotor zum Antreiben des Ausgangselements zu einer Drehbewegung vorgesehen, wobei eine Steuereinrichtung der Türschlossantriebsvorrichtung dazu angepasst ist, den Elektromotor zu einer Antriebsfahrt anzusteuern. Entsprechende Steuerparameter für die Steuereinrichtung sind in einem nicht-flüchtigen Speicher gespeichert.

Eine derartige Türschlossantriebsvorrichtung ist beispielsweise aus der DE 10 2004 021 704 B3 bekannt.

Eine derartige Türschlossantriebsvorrichtung ermöglicht ein automatisches Entriegeln von Haus- oder Wohnungstüren, beispielsweise per Knopfdruck an einer Fernbedienungseinrichtung, welche einen Funksender aufweist, der in einem nahen Umkreis um die Türschlossantriebsvorrichtung für ein Entriegeln des betreffenden Türschlosses der Tür ausgelöst wird. Ein solches ferngesteuertes Entriegeln kann insbesondere für eine außenseitige Eingangstür eines Gebäudes oder einer Wohnung vorteilhaft sein, da ein allgemein bekanntes Entriegeln mithilfe eines mechanischen Schlüssels deutlich umständlicher sein kann als eine Entriegelungsautomatik. Insbesondere dann, wenn ein berechtigter Benutzer z.B. mit mehreren Gepäckstücken beladen eine Wohnung durch die Eingangstür betreten möchte, kann eine Entriegelungsautomatik vorteilhaft sein. Sofern das Türschloss der Eingangstür mit einer Türschlossantriebsvorrichtung ausgestattet ist, kann der Benutzer z.B. durch die genannte Fernbedienungseinrichtung die Tür vollständig entriegeln, so dass er durch einfaches Aufstoßen der Tür (beispielsweise mit einem seitlichen Stoß des Körpers) die Wohnung einfach betreten kann, ohne zuvor die Gepäckstücke aus der Hand legen zu müssen.

Eine Türschlossantriebsvorrichtung kann an einem bestehenden Türschloss nachgerüstet werden oder einen festen Bestandteil eines Türschlosses bilden, wobei die Türschlossantriebsvorrichtung aus Sicherheitsgründen insbesondere für den Fall einer Eingangstür eines Gebäudes oder einer Wohnung an der Türinnenseite (d.h. an der dem Gebäude- oder Wohnungsinnenraum zugewandten Seite der Tür) angeordnet sein sollte.

Bei einem bestehenden Türschloss handelt es sich typischerweise um ein sogenanntes Einsteckschloss, welches einen Riegel und eine in Schließrichtung vorgespannte Falle aufweist, und welches in einem Aufnahmespalt einer Tür aufgenommen und mit Schrauben an der Tür gesichert ist. Ein solches Einsteckschloss wird intern mittels einer drehbaren Schließnase betätigt, welche an einem in das Einsteckschloss eingesetzten Schließzylinder (z.B. ein Profilzylinder) ausgebildet ist. Um das eingangs genannte drehbare Ausgangselement einer Türschlossantriebsvorrichtung direkt mit einem solchen Türschloss antriebswirksam zu koppeln (um das Türschloss betätigen zu können), kann das Ausgangselement eine drehbare Schließnase aufweisen, welche z.B. über eine Welle und/oder ein Getriebe mit dem Elektromotor verbunden ist. In diesem Fall bildet die Türschlossantriebsvorrichtung einen Teil des Türschlosses.

Alternativ kann das drehbare Ausgangselement indirekt mit dem Türschloss antriebswirksam gekoppelt werden, z.B. über einen dem Türschloss zugeordneten Schlüssel, welcher in den Schließzylinder des Türschlosses eingeführt ist. Hierzu kann das Ausgangselement ein Eingriffselement (z.B. eine Klammer) aufweisen, das den Schlüsselkopf oder den Schlüsselschaft umgreift. Eine solche indirekte Kopplung des Ausgangselements mit dem Türschloss ist insbesondere für eine Nachrüstlösung vorteilhaft, da eine Kopplung über einen Schlüssel universell gestaltet werden kann.

Optional kann die Türschlossantriebsvorrichtung mit einer Handhabe ausgestattet sein, um das Türschloss auch händisch über die Handhabe betätigen zu können. Die Handhabe einer solchen Türschlossantriebsvorrichtung ist aus Sicherheitsgründen ausschließlich an einer Türinnenseite angebracht. Wenn beispielsweise die Fernbedienungseinrichtung nicht verfügbar ist oder wenn die elektrische Energieversorgung der Türschlossantriebsvorrichtung unterbrochen ist, z.B. wenn eine Batterie der Türschlossantriebsvorrichtung erschöpft ist, kann das Türschloss dennoch über die Handhabe der Türschlossantriebsvorrichtung entriegelt oder verriegelt werden.

Für einen ferngesteuerten Betrieb der Türschlossantriebsvorrichtung ist zum Entriegeln und Verriegeln des Türschlosses ein Elektromotor vorgesehen. Dabei ist das drehbare Ausgangselement direkt oder indirekt mit einem Rotor des Elektromotors gekoppelt, welcher für ein Entriegeln oder Verriegeln des Türschlosses im Zuge einer Antriebsfahrt elektromotorisch gedreht wird. Ausgehend von einem Verriegelungszustand, in dem der Riegel und die Falle des Türschlosses die Tür verriegeln, wird der Elektromotor dazu verwendet, mittels des drehbaren Ausgangselements zunächst den Riegel des Türschlosses aus einer Verriegelungsposition in eine Entriegelungsposition zu versetzen und sodann die vorgespannte Falle zurückzuziehen, um das Türschloss zu öffnen. Wenn der Riegel sich in der Entriegelungsposition befindet und die Falle zurückgezogen ist, befindet sich das Türschloss in einem vollständigen Öffnungszustand, der ein unmittelbares Öffnen der betreffenden Tür (durch Bewegen der Tür in Öffnungsrichtung) erlaubt.

Aus der obigen Erläuterung geht hervor, dass der Betrieb einer derartigen Türschlossantriebsvorrichtung unmittelbar mit der Mechanik des gekoppelten Türschlosses zusammenhängt. Ein hierbei leicht übersehener Aspekt besteht darin, dass der Elektromotor während einer Antriebsfahrt in der Regel unterschiedlich hohe Drehmomente aufbringen muss, um das Ausgangselement der Türschlossantriebsvorrichtung bzw. das gekoppelte Eingangselement des Türschlosses wirksam anzutreiben. Beispielsweise kann das zum Versetzen des Riegels notwendige Drehmoment variabel sein und sich von dem Drehmoment zum Rückziehen der federvorgespannten Falle unterscheiden. Mit anderen Worten besitzt das Türschloss bezüglich einer Drehung seines Eingangselements eine über den Drehbereich variierende (Dreh-) Widerstandscharakteristik bzw. Drehmomentcharakteristik.

Wird der Elektromotor während einer Antriebsfahrt mit lediglich konstanter Energiezufuhr betrieben, stellt sich aufgrund der variablen Widerstandscharakteristik häufig eine zeitlich variable Drehgeschwindigkeit des Ausgangselements ein, wobei die Drehgeschwindigkeit bei einem niedrigen Drehwiderstand höher ist als bei einem größeren Drehwiderstand des Eingangselements. Eine variable Drehgeschwindigkeit kann dem Benutzer der Türschlossantriebsvorrichtung jedoch einen getrübten Qualitätseindruck der Türschlossantriebsvorrichtung vermitteln, insbesondere wenn während einer Antriebsfahrt ein "leierndes" klingendes Geräusch abgegeben wird, welches zudem aufgrund der zeitlichen Dynamik im Vergleich zu einem invarianten Geräusch kognitiv bewusster wahrgenommen wird. Ferner kann der Energieverbrauch der Türschlossantriebsvorrichtung aufgrund der variablen Drehgeschwindigkeit erhöht sein.

Das Problem der variablen Drehgeschwindigkeit ist insbesondere deswegen schwer zu lösen, weil jedes Türschloss üblicherweise eine individuelle Widerstandscharakteristik aufweist, welche sich zudem durch Alterung und Abnutzung der beweglichen Teile des Türschlosses im Laufe der Zeit auf nicht vorhersagbare Weise ändert. Eine einmalige, werksseitige Anpassung der Türschlossantriebsvorrichtung an einen betreffenden Türschlosstyp ist somit keine erfolgsversprechende Maßnahme. Ferner soll eine Türschlossantriebsvorrichtung grundsätzlich für verschiedene Türschlösser bzw. für verschiedene Widerstandscharakteristiken von Türschlössern einsetzbar sein und hierbei jeweils einen gleichbleibenden und möglichst hohen Qualitätseindruck vermitteln.

Neben der variablen Widerstandscharakteristik ist der Aspekt einer nachlassenden Energieversorgung des Elektromotors bezüglich des subjektiven Qualitätseindrucks der Türschlossantriebsvorrichtung relevant. Beispielsweise kann die Drehgeschwindigkeit des Ausgangselements der Türschlossantriebsvorrichtung durch Erschöpfung von zur Versorgung des Elektromotors vorgesehenen Batterien und/oder Akkus zusätzlich beeinträchtigt werden. Hierdurch kann insbesondere die Drehgeschwindigkeit des Ausgangselements insgesamt oder teilweise derart verringert sein, dass der Benutzer viel länger als gewöhnlich warten muss, bis das Türschloss im Zuge einer Antriebsfahrt der Türschlossantriebsvorrichtung vollständig entriegelt ist.

Eine Variabilität der Drehgeschwindigkeit kann sowohl während einer einzelnen Antriebsfahrt als auch über mehrere Antriebsfahrten hinweg auftreten. In beiden Fällen kann der Qualitätseindruck vermindert sein. Zusätzlich besteht das Problem, dass die Drehgeschwindigkeit bei nachlassender Spannungsversorgung während einer Antriebsfahrt besonders stark variieren und entsprechend zu einem besonders negativen Qualitätseindruck führen kann.

Es ist eine Aufgabe der Erfindung eine verbesserte Türschlossantriebsvorrichtung anzugeben, bei der die vorstehend beschriebenen Probleme vermieden werden.

Die Aufgabe wird gelöst durch eine Türschlossantriebsvorrichtung mit den Merkmalen des Anspruchs 1 und insbesondere dadurch, dass die Türschlossantriebsvorrichtung eine Sensoranordnung zum Erfassen eines Drehgeschwindigkeits-Istwerts aufweist, der eine aktuelle Drehgeschwindigkeit des Ausgangselements repräsentiert, wobei die Steuereinrichtung ferner dazu angepasst ist, während einer Antriebsfahrt des Elektromotors in einem Normalbetrieb den erfassten Drehgeschwindigkeits-Istwert mit einem Drehgeschwindigkeits-Sollwert zu vergleichen, der in dem Speicher gespeichert ist und der eine erwünschte Drehgeschwindigkeit des Ausgangselements repräsentiert, und im Falle einer Abweichung des Drehgeschwindigkeits-Istwerts von dem Drehgeschwindigkeits-Sollwert die Ansteuerung des Elektromotors in Abhängigkeit von der Höhe der Abweichung anzupassen.

Die Anpassung der Ansteuerung des Elektromotors erfolgt vorzugsweise mit dem Ziel, die Abweichung zwischen Drehgeschwindigkeits-Istwert und Drehgeschwindigkeits-Sollwert zu minimieren.

Mit anderen Worten weist die Türschlossantriebsvorrichtung eine Regelung für die Drehgeschwindigkeit des Ausgangselements auf, wodurch das Ausgangselement und insbesondere ein mit dem Ausgangselement gekoppeltes Eingangselement eines Türschlosses mit einer erwünschten Drehgeschwindigkeit angetrieben werden kann. Somit wird eine automatische Anpassung der Türschlossantriebsvorrichtung an eine bestimmte Widerstandscharakteristik eines Türschloss ermöglicht. Hierdurch kann auch eine über die Zeit auftretende Änderung der Widerstandscharakteristik des Türschlosses oder eine nachlassende Energieversorgung des Elektromotors kompensiert werden.

Die Regelung der Drehgeschwindigkeit muss sich nicht notwendigerweise unmittelbar auf die Drehgeschwindigkeit des Ausgangselements der Türschlossantriebsvorrichtung beziehen. So kann die Drehgeschwindigkeit auch in Abhängigkeit von Teilen definiert werden, welche mit dem Ausgangselement drehwirksam gekoppelt sind. Beispielsweise kann sich die Drehgeschwindigkeit auf einen Rotor des zum Antreiben des Ausgangselements vorgesehenen Elektromotors beziehen. In Frage kommt auch die Drehgeschwindigkeit des Eingangselements eines Türschlosses, welches mit dem Ausgangselement der Türschlossantriebsvorrichtung gekoppelt ist.

Ferner ist es nicht unbedingt erforderlich, jegliche Abweichung des Drehgeschwindigkeits-Istwerts von dem Drehgeschwindigkeits-Sollwert zu berücksichtigen. Vielmehr kann auch ein Schwellenwert vorgesehen sein, den die ermittelte Abweichung erreichen oder überschreiten muss, damit die Ansteuerung des Elektromotors entsprechend angepasst wird.

Gemäß einer Ausführungsform ist die Steuereinrichtung dazu angepasst, den Elektromotor gemäß einem Motorsteuersignal anzusteuern, welches die Höhe einer Energiezufuhr an den Elektromotor beeinflusst. Die Energiezufuhr steht hierbei in Beziehung zu dem von dem Elektromotor aufgebrachten Drehmoment. Somit kann die durch das Motorsteuersignal vorgegebene Energiezufuhr an den Elektromotor entsprechend der Abweichung von Drehgeschwindigkeits-Istwert und Drehgeschwindigkeits-Sollwert, d.h. entsprechend zu der Stellgröße der Drehgeschwindigkeitsregelung korrigiert werden.

Die Energiezufuhr an den Elektromotor wird vorzugsweise mittels einer Pulsweitenmodulation der zum Betrieb des Elektromotors angelegten Motorspannung gesteuert. Das zur entsprechenden Ansteuerung eingesetzte Motorsteuersignal kann diesbezüglich einen Tastgrad der Pulsweitenmodulation vorgeben, wobei der Tastgrad hier allgemein als das zeitliche Verhältnis von eingeschalteter zu ausgeschalteter Motorspannung definiert ist. Das Motorsteuersignal kann beispielsweise ein zeitlicher Verlauf des Tastgrades oder hiervon abgeleiteter Größen sein.

Alternativ oder zusätzlich kann die Energiezufuhr auch durch unmittelbare Variation der Höhe der Motorspannung gesteuert werden. Ferner ist auch denkbar, die Drehgeschwindigkeit des Elektromotors bzw. das von dem Elektromotor aufbringbare Drehmoment nicht über eine Steuerung der Energiezufuhr sondern über eine Steuerung der Übersetzung eines einstellbaren Getriebes zu realisieren, welches den Elektromotor und das Ausgangselement drehwirksam miteinander koppelt.

Gemäß einer bevorzugten Ausführungsform ist die Steuereinrichtung dazu angepasst, in dem Normalbetrieb den Elektromotor im Sinne einer im Wesentlichen konstanten Drehgeschwindigkeit anzusteuern, d.h. die Steuereinrichtung regelt die Drehgeschwindigkeit in Abhängigkeit eines im Wesentlichen konstanten Drehgeschwindigkeits-Sollwerts. Die tatsächlich erzielte Drehgeschwindigkeit muss nicht exakt konstant sein, um die Vorteile der erfindungsgemäßen Türschlossantriebsvorrichtung zu verwirklichen. Vielmehr kommt es darauf an, eine signifikante Variation der Drehgeschwindigkeit zu kompensieren und/oder eine Mindestdrehgeschwindigkeit nicht zu unterschreiten. Insbesondere kann die Variation der Drehgeschwindigkeit derart kompensiert werden, dass die Drehgeschwindigkeit akustisch bzw. subjektiv als konstant wahrgenommen wird. Ferner kann in verschiedenen Positionen (insbesondere zu den beiden Enden des Drehwinkelbereichs) eine Abweichung von einer konstanten Drehgeschwindigkeit vorgesehen sein, um den Elektromotor bzw. das Ausgangselement kontrolliert abzubremsen oder zu beschleunigen.

Nach einer weiteren Ausführungsform ist die Steuereinrichtung ferner dazu angepasst, während der Antriebsfahrt des Elektromotors in dem Normalbetrieb den für verschiedene Drehstellungen des Ausgangselements erfassten jeweiligen Drehgeschwindigkeits-Istwert mit dem Drehgeschwindigkeits-Sollwert zu vergleichen. Denkbar ist z.B. ein kontinuierliches oder quasi-kontinuierliches Erfassen des jeweiligen Drehgeschwindigkeits-Istwerts und Vergleichen mit dem Drehgeschwindigkeits-Sollwert. Insbesondere kann ein Vergleich in regelmäßigen zeitlichen oder drehstellungsbezogenen Intervallen durchgeführt werden. Beispielsweise kann ein Drehwinkelgeber der Türschlossantriebsvorrichtung eine Winkelstellung des Rotors mit einer vorbestimmten Abtastperiode abtasten, wobei ein Vergleich des aktuell erfassten Drehgeschwindigkeits-Istwerts mit dem Drehgeschwindigkeits-Sollwert in Abhängigkeit von der aktuell abgetasteten Winkelstellung des Rotors erfolgt.

Gemäß einer weiteren Ausführungsform sind in dem Speicher für verschiedene Drehstellungen des Ausgangselements individuelle Drehgeschwindigkeits-Sollwerte gespeichert, wobei die Steuereinrichtung ferner dazu angepasst ist, während der Antriebsfahrt des Elektromotors in dem Normalbetrieb den für verschiedene Drehstellungen des Ausgangselements erfassten jeweiligen Drehgeschwindigkeits-Istwert mit dem der jeweiligen Drehstellung des Ausgangselements entsprechenden individuellen Drehgeschwindigkeits-Sollwert zu vergleichen. Entsprechend kann das Motorsteuersignal in Abhängigkeit von den drehstellungsabhängigen Abweichungen der betreffenden Ist- und Sollwerte festgelegt werden.

Hierbei kann die Steuereinrichtung dazu angepasst sein, in dem Normalbetrieb den Elektromotor für die verschiedenen Drehstellungen des Ausgangselements in Abhängigkeit von der Höhe der Abweichung des jeweiligen Drehgeschwindigkeits-Istwerts von dem individuellen Drehgeschwindigkeits-Sollwert anzusteuern. Hierdurch ist eine besonders präzise Regelung der Drehgeschwindigkeit über den Drehbereich des Ausgangselements möglich.

Gemäß einer alternativen Ausführungsform ist die Steuereinrichtung dazu angepasst, in dem Normalbetrieb im Falle einer Abweichung des Drehgeschwindigkeits-Istwerts von dem Drehgeschwindigkeits-Sollwert die Ansteuerung des Elektromotors für die gesamte Antriebsfahrt gleichartig anzupassen. Die Regelung der Drehgeschwindigkeit kann hierdurch besonders einfach gestaltet werden, z.B. durch eine drehstellungsunabhängige Anpassung der Ansteuerung des Elektromotors. Beispielsweise kann im Falle der oben beschriebenen Pulsweitenmodulation der Motorspannung der zugrundeliegende Tastgrad mit einem Offset-Wert versehen werden, um insbesondere eine zu niedrige Drehgeschwindigkeit durch einen für alle Drehstellungen identischen Korrekturwert zu kompensieren. Um diese Anpassung so einfach wie möglich zu halten, kann als Offset-Wert ein vorbestimmter Wert vorgesehen werden, welcher bei einer zu niedrigen Drehgeschwindigkeit auf den aktuellen Tastgrad addiert wird. Alternativ kann ein Offset-Wert auch aus der Differenz zwischen Istwert und Sollwert, z.B. einem über die Antriebsfahrt hinweg berechneten Mittelwert der Differenz, ermittelt werden, um eine präzisere Regelung der Drehgeschwindigkeit zu erzielen.

Um eine einmal durchgeführte Anpassung der Regelung der Drehgeschwindigkeit nicht bei jeder Antriebsfahrt vollständig aufs Neue durchführen zu müssen, kann die Steuereinrichtung dazu angepasst sein, in dem Normalbetrieb im Falle einer Abweichung des Drehgeschwindigkeits-Istwerts von dem Drehgeschwindigkeits-Sollwert wenigstens einen Korrekturwert, der die Höhe der Abweichung repräsentiert, in dem Speicher zu speichern, und in einer nachfolgenden Antriebsfahrt des Elektromotors den gespeicherten Korrekturwert der Ansteuerung des Elektromotors zugrunde zu legen. Insbesondere kann für eine nachfolgende Antriebsfahrt der gespeicherte Korrekturwert ausgelesen und mit einem ebenfalls aus dem Speicher ausgelesenen Motorsteuersignal verrechnet werden (z.B. durch Addition oder Subtraktion). Der Korrekturwert kann ein drehstellungsabhängiger Wert oder ein über den Drehwinkelbereich konstanter Wert sein.

Vorzugsweise umfasst die Sensoranordnung wenigstens einen Drehstellungsdetektor, der direkt oder indirekt eine absolute Drehstellung oder eine relative Drehstellungsänderung des Ausgangselements oder eines Rotors des Elektromotors detektiert. Ein derartiger Drehstellungsdetektor kann beispielsweise an dem Elektromotor, an dem Ausgangselement oder an einem Untersetzungsgetriebe wenigstens einen Hallsensor oder sonstigen Magnetsensor, optischen Positionssensor, sogenannte Rotary-Potentiometer, Ring-Type Encoder, Magnetic-Type Encoder oder Ring-Type Potentiometer umfassen. Mithilfe eines derartigen Drehstellungsdetektors kann optional neben der Drehstellung oder Drehstellungsänderung auch direkt die Drehgeschwindigkeit des Ausgangselements oder des Rotors (Drehgeschwindigkeits-Istwert) gemessen werden. Ferner kann die Steuereinrichtung dazu angepasst sein, auf Grundlage der detektierten Drehstellung oder relativen Drehstellungsänderung und auf Grundlage eines Zeitmesssignals den Drehgeschwindigkeits-Istwert indirekt zu ermitteln.

Im Folgenden werden Ausführungsformen beschrieben, die sich auf einen Lernbetrieb der Türschlossantriebsvorrichtung beziehen. Im Zuge eines Lernbetriebs wird die Türschlossantriebsvorrichtung hinsichtlich eines späteren Normalbetriebs an ein Türschloss angepasst, mit dem die Türschlossantriebsvorrichtung gekoppelt ist. Als Ergebnis des Lernbetriebs werden hierbei ermittelte Referenzwerte als Steuerparameter in dem nicht-flüchtigen Speicher der Türschlossantriebsvorrichtung gespeichert.

Gemäß einer Ausführungsform ist die Steuereinrichtung dazu angepasst, während wenigstens einer Antriebsfahrt des Elektromotors in einem Lernbetrieb für verschiedene Drehstellungen des Ausgangselements den jeweiligen Drehgeschwindigkeits-Istwert zu erfassen und für die verschiedenen Drehstellungen des Ausgangselements individuelle Motorsteuersignale zu ermitteln, die einer gewünschten Drehgeschwindigkeit des Ausgangselements entlang der gesamten Antriebsfahrt entsprechen; wobei die Steuereinrichtung ferner dazu angepasst ist, in dem Normalbetrieb den Elektromotor gemäß den ermittelten Motorsteuersignalen anzusteuern. Mit anderen Worten wird im Lernbetrieb wenigstens ein Motorsteuersignal in Abhängigkeit von dem betreffenden Türschloss ermittelt, um das Eingangselement des Türschlosses im Normalbetrieb mit einer gewünschten Drehgeschwindigkeit anzutreiben. Die genannte gewünschte Drehgeschwindigkeit des Ausgangselements kann als Werkseinstellungswert in dem nicht-flüchtigen Speicher gespeichert sein und/oder in einem Konfigurierungsmodus vom Benutzer individuell vorgegeben werden. Bei der genannten gewünschten Drehgeschwindigkeit des Ausgangselements kann es sich insbesondere um eine im Wesentlichen konstante Drehgeschwindigkeit handeln.

Insbesondere kann die Steuereinrichtung dazu angepasst sein, in dem Lernbetrieb die individuellen Motorsteuersignale für die verschiedenen Drehstellungen des Ausgangselements dadurch zu ermitteln, dass der erfasste jeweilige Drehgeschwindigkeits-Istwert mit einem vorbestimmten Sollwert verglichen wird und ein jeweiliger Steuersignal-Werkseinstellungswert in Abhängigkeit von dem Vergleichsergebnis einmalig oder iterativ im Sinne einer Angleichung des erfassten jeweiligen Drehgeschwindigkeits-Istwerts an den vorbestimmten Sollwert angepasst wird. Hierfür können der vorbestimmte Sollwert und der jeweilige Steuersignal-Werkseinstellungswert bei der Herstellung der Türschlossantriebsvorrichtung als Basis für die Ansteuerung des Elektromotors festgelegt und gespeichert werden.

Vorzugsweise ist die Steuereinrichtung dazu angepasst, die in dem Lernbetrieb für die verschiedenen Drehstellungen des Ausgangselements ermittelten individuellen Motorsteuersignale (bzw. äquivalente Steuerparameter) in dem Speicher zu speichern, damit die gespeicherten Werte für den späteren Normalbetrieb zur Verfügung stehen.

Gemäß einer vorteilhaften Weiterbildung kann die Steuereinrichtung dazu angepasst sein, in dem Lernbetrieb nicht nur individuelle Motorsteuersignale zu ermitteln und zu speichern, sondern während einer weiteren Antriebsfahrt des Elektromotors für verschiedene Drehstellungen des Ausgangselements den jeweiligen Drehgeschwindigkeits-Istwert zu erfassen und als individuellen Drehgeschwindigkeits-Sollwert in dem Speicher zu speichern. Hierdurch werden also die bereits genannten individuellen Drehgeschwindigkeits-Sollwerte ermittelt und gespeichert. Die genannte weitere Antriebsfahrt im Lernbetrieb kann insbesondere auf den zuvor bereits ermittelten individuellen Motorsteuersignalen basieren, die auch dem späteren Normalbetrieb der Türschlossantriebsvorrichtung zugrunde gelegt werden.

Des Weiteren kann die Steuereinrichtung dazu angepasst sein, in dem Lernbetrieb wenigstens eine Drehstellung des Ausgangselements zu ermitteln, die einem mechanischen Anschlag entspricht und die eine Endposition der Antriebsfahrt des Elektromotors bildet. Insbesondere können die einem Verriegelungsanschlag und einem Entriegelungsanschlag des betreffenden Türschlosses entsprechenden Endpositionen der Antriebsfahrt ermittelt werden. Mit anderen Worten sind in dem Lernbetrieb die Endpositionen einer erwünschten Antriebsfahrt ermittelbar, so dass ein Drehwinkelbereich des Elektromotors festgelegt wird, der die im Normalbetrieb zu durchfahrenen Drehstellungen des Elektromotors umfasst. Zusätzlich kann auch eine Drehstellung des Ausgangselements ermittelt werden, die einer Zwischenposition entspricht, in der ein Riegel des zugeordneten Türschlosses vollständig in das Türschloss eingefahren ist und eine federvorgespannte Falle des Türschlosses für ein schnappendes Herausragen aus dem Türschloss freigegeben ist.

Zur Ermittlung der Endpositionen kann eine Messeinrichtung zur Beobachtung des Motorstroms, insbesondere des Rotorstroms des Elektromotors, vorgesehen sein, wobei der gemessene Motorstrom mit einem vorbestimmten Schwellenwert verglichen wird. Bei Überschreiten des Schwellenwerts wird das Erreichen einer jeweiligen Endposition ermittelt. Insbesondere bei Verwendung eines Gleichstrommotors führt ein durch Erreichen eines mechanischen Anschlags blockierter Rotor zu einem signifikanten Anstieg des Rotorstroms, welcher zur Ermittlung der entsprechenden Endposition erfasst wird. Die ermittelte (und insbesondere zur Verwendung im Normalbetrieb gespeicherte) Endposition muss nicht exakt dem detektierten mechanischen Anschlag entsprechen, sondern kann in einem erwünschten Abstand hierzu liegen. Die ermittelten Endpositionen können insbesondere dazu dienen, den Elektromotor in dem Normalbetrieb bereits vor dem Erreichen eines mechanischen Anschlags kontrolliert abzubremsen. Hierdurch können unzulässig hohe Drehmomente im Antrieb vermieden und der Motorlauf sehr sanft gestaltet werden. Wie bereits erläutert, steht ein derartiges kontrolliertes Abbremsen nicht einer im Wesentlichen konstanten Drehgeschwindigkeit über den Drehwinkelbereich zwischen den Endpositionen entgegen.

Nach einer Ausführungsform kann die Steuereinrichtung dazu angepasst sein, in dem Lernbetrieb eine Drehstellung des Ausgangselements zu ermitteln, in der ein Riegel eines mit dem Ausgangselement gekoppelten Türschlosses vollständig aus dem Türschlosses ausgefahren ist, und/oder in der ein Riegel eines mit dem Ausgangselement gekoppelten Türschlosses vollständig in einen Innenbereich des Türschlosses versetzt ist und eine federvorgespannte Falle des Türschlosses aus dem Innenbereich herausragt, und/oder in der ein Riegel eines mit dem Ausgangselement gekoppelten Türschlosses vollständig in einen Innenbereich des Türschlosses versetzt ist und eine federvorgespannte Falle des Türschlosses in den Innenbereich des Türschlosses zurückgezogen ist. Diese Drehstellungen des Ausgangselements entsprechen einer jeweiligen Endlage des Riegels. Die Drehstellung des Ausgangselements bei vollständig ausgefahrenem Riegel und die Drehstellung des Ausgangselements bei eingefahrenem Riegel und vollständig zurückgezogener Falle können jeweils eine Endposition der Antriebsfahrt in dem vorstehend erläuterten Sinne bilden, die beispielsweise für ein rechtzeitiges Abbremsen des Elektromotors berücksichtigt werden kann.

Auf diese Weise kann insbesondere auch eine "Fallendetektion" des betreffenden Türschlosses durchgeführt werden. Eine solche Fallendetektion umfasst die Ermittlung einer jeweiligen Drehstellung des Ausgangselements, in der bei eingefahrenem Riegel die Falle entsprechend ihrer Vorspannung aus dem Türschloss herausragt (um schappend in eine zugeordnete Aufnahme eines Türrahmens eingreifen zu können) bzw. in der die Falle entgegen ihrer Vorspannung in Richtung des Innenbereichs des Türschlosses zurückgezogen ist. Die erstgenannte Drehstellung kann während eines Drehantriebs im Öffnungssinne insbesondere aufgrund eines nachfolgend markant ansteigenden Motorstroms erfolgen (nachfolgendes Zurückziehen der Falle entgegen ihrer Vorspannung). Die Ermittlung der letztgenannten Drehstellung kann während eines Drehantriebs im Öffnungssinne insbesondere aufgrund eines noch stärkeren Anstiegs des Motorstroms erfolgen, welcher bei Erreichen des mechanischen Endanschlags durch einen Anstieg des von dem Elektromotor aufzubringenden Drehmoments hervorgerufen wird.

Ferner kann eine Detektion eines Anstiegs des Motorstroms dazu ausgenutzt werden, die Drehrichtung des Ausgangselements zum Öffnen des Türschlosses von derjenigen zum Schließen zu unterscheiden und die beiden Drehrichtungen entsprechend richtig zuzuordnen. Hierzu können auch ausgehend von der genannten Drehstellung, in der die Falle maximal aus dem Innenbereich des Türschlosses herausragt und der Riegel in den Innenbereich versetzt ist, die jeweils unterschiedlichen Drehwinkelbereiche bis zum Erreichen der jeweiligen Endposition bestimmt werden und für eine korrekte Zuordnung der Drehrichtungen herangezogen werden.

Die Erfindung bezieht sich ferner auf ein Türschloss mit einem Schließzylinder und einer Türschlossantriebsvorrichtung nach zumindest einer der vorstehend beschriebenen Ausführungsformen, wobei das Ausgangselement der Türschlossantriebsvorrichtung mit einem Eingangselement des Schließzylinders direkt oder über einen zugeordneten Schlüssel indirekt antriebswirksam gekoppelt ist.

Die Erfindung wird im Folgenden beispielhaft anhand der Zeichnungen beschrieben.
- Fig. 1: ist eine vereinfachte perspektivische Ansicht von Teilen einer an einem Türschloss anzubringenden Türschlossantriebsvorrichtung.
- Fig. 2: ist ein Blockschaltbild einer internen Elektronik der Türschlossantriebsvorrichtung von Fig. 1 mit angekoppeltem Türschloss.

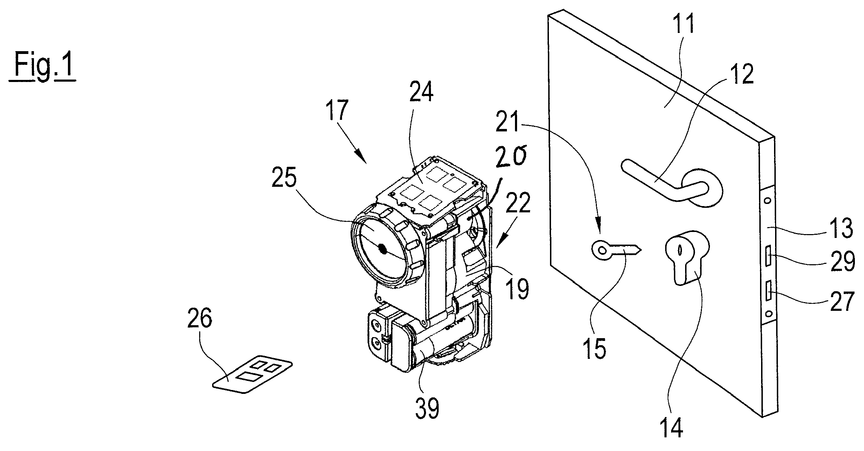

Fig. 1 zeigt einen Teil eines Türblatts 11, das in grundsätzlich bekannter Weise einen Türgriff 12 und ein Türschloss 13 mit einem Schließzylinder 14 umfasst. In den Schließzylinder 14 ist ein Schlüssel 15 einsteckbar.

Zum automatischen Bewegen des Schlüssels 15 in eine Öffnungsstellung bzw. in eine Schließstellung ist eine Türschlossantriebsvorrichtung 17 vorgesehen, deren gehäuseartiger Grundkörper 19 zur Befestigung an dem Schließzylinder 14 ausgebildet ist. Beispielsweise könnte der Grundkörper 19 mittels einer Klemmeinrichtung (nicht gezeigt) an den über das Türblatt 11 überstehenden Abschnitt des Schließzylinders 14 angeklemmt sein. Der Grundkörper 19 könnte jedoch auch an einer Rosette oder direkt am Türblatt 11 befestigt sein.

Wenn sich der Schlüssel 15 im Schließzylinder 14 befindet und der Grundkörper 19 der Türschlossantriebsvorrichtung 17 am Schließzylinder 14 befestigt ist, ist ein an der Rückseite des Grundkörpers 19 befindliches Ausgangselement 20 mit einem Kopf 21 des Schlüssels 15 drehfest verbunden und bewirkt so über den eingesteckten Schlüssel 15 eine indirekte antriebswirksame Kopplung zwischen einem ebenfalls in dem Grundkörper 19 angeordneten elektromechanischen Antrieb 22 und dem Türschloss 13. Der elektromechanische Antrieb 22 umfasst den nachstehend noch genannten Elektromotor und optional eine Getriebe und/oder eine Kupplung. Ein ebenfalls antriebswirksam mit dem elektromechanischen Antrieb 22 verbundener Drehknauf 25 dient dazu, einem Benutzer ein manuelles Öffnen oder Schließen des Schlosses 13 bei montierter Türschlossantriebsvorrichtung 17 zu ermöglichen. An dem Grundkörper 19 ist auch eine elektronische Steuereinrichtung 24 einschließlich einer Funkempfangseinrichtung angeordnet. Die Steuereinrichtung 24 steht mit dem elektromechanischen Antrieb 22 in Verbindung und steuert dessen Betrieb anhand von Eingangssignalen einer Funkfernbedienung 26.

Das Türschloss 13 ist als ein bekanntes Einsteckschloss ausgebildet, wobei zur Entriegelung des Türschlosses 13 ein Riegel 27 sowie eine in Schließrichtung federvorgespannte Falle 29 in einen Innenbereich des Türschlosses 13 zurückgezogen sein müssen. Dieser Zustand entspricht einem vollständigen Öffnungszustand des Türschlosses 13, in dem das Türblatt 11 ohne Herunterdrücken des Türgriffs 12 geöffnet werden kann.

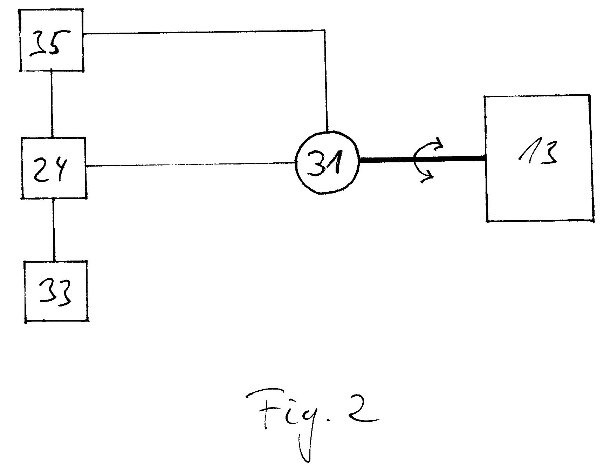

Das Türschloss 13 befinde sich nun in einem verriegelten Zustand, in dem der Riegel 27 und die Falle 29 teilweise aus dem Türschloss 13 in eine jeweilige Aufnahme eines nicht gezeigten Türrahmens versetzt sind. Um den Riegel 27 und die Falle 29 in das Türschloss 13 zurückzuziehen (vollständiger Öffnungszustand), muss eine (nicht gezeigte) Schließnase des Schließzylinders 14 durch Drehung des in den Schließzylinder 14 eingesteckten Schlüssels 15 in Öffnungsrichtung gedreht werden. Hierzu wird das mit dem Schlüssel 15 gekoppelte Ausgangselement 20 durch den elektromechanischen Antrieb 22 gedreht. Zur Energieversorgung eines dem elektromechanischen Antrieb 22 zugeordneten Elektromotors 31 (Fig. 2) sind mehrere Batterien 39 (Fig. 1) vorgesehen.

In Fig. 2 ist ein Blockschaltbild gezeigt, welches den funktionalen Zusammenhang zwischen der Steuereinrichtung 24, dem Elektromotor 31 und dem Türschloss 13 vereinfacht verdeutlicht. Ein nicht gezeigter Rotor des Elektromotors 31 ist drehwirksam mit dem Türschloss 13 gekoppelt, sodass durch eine Drehung des Rotors das Türschloss 13 von dem verriegelten Zustand in den vollständigen Öffnungszustand überführt werden kann und umgekehrt. Der Betrieb des Elektromotors 31 wird durch Übertragung von Motorsteuersignalen der Steuereinrichtung 24 an den Elektromotor 31 gesteuert. Hierzu ist die Steuereinrichtung 24 mit einem nichtflüchtigen Speicher 33 (z.B. Flashspeicher) verbunden, wobei die Steuereinrichtung 24 Steuerparameter der Türschlossantriebsvorrichtung 17 aus dem Speicher 33 auslesen und überschreiben kann. Ferner ist ein Drehwinkelgeber 35 vorgesehen, welcher mit der Steuereinrichtung 24 und dem Elektromotor 31 verbunden und dazu konfiguriert ist, eine Drehwinkelstellung des Rotors des Elektromotors 31 zu messen. Darüber hinaus ist die Steuereinrichtung 24 dazu angepasst, aufgrund einer von dem Drehwinkelgeber 35 erfassten relativen Drehwinkelstellungsänderung des Rotors des Elektromotors 31 eine aktuelle Drehwinkelgeschwindigkeit des Rotors zu messen.

In einem Lernbetrieb der Türschlossantriebsvorrichtung 31 ermittelt die Steuereinrichtung 24 den maximal möglichen Drehwinkelbereich des Rotors des Elektromotors 31. Der maximal mögliche Drehwinkelbereich kann beispielsweise mehrere Umdrehungen des Rotors umfassen; der Drehwinkelbereich kann aber auch kleiner sein und muss nicht notwendigerweise eine vollständige Umdrehung des Rotors umfassen. Die Steuereinrichtung 24 kann mittels des Drehwinkelgebers 35 innerhalb des Drehwinkelbereichs und insbesondere innerhalb einer Rotorumdrehung verschiedene Drehwinkelstellungen erfassen und unterscheiden. Die Endpositionen des Drehwinkelbereichs sind durch die jeweilige maximale Drehstellung des Rotors in Öffnungs- und Schließrichtung des Türschlosses 13 bei einer Antriebsfahrt des Elektromotors 31 definiert, wobei das Türschloss 13 sich in der einen Endposition im vollständigen Öffnungszustand und in der anderen Endposition im vollständigen Verriegelungszustand befindet. Die entsprechenden Drehwinkelstellungen werden in dem Speicher 33 gespeichert, wobei anstelle eines mechanischen Anschlags als jeweilige Endposition des Drehwinkelbereichs vorzugsweise ein Positionswert gespeichert wird, der vor dem Erreichen des mechanischen Anschlags liegt, um beispielsweise ein kontrolliertes Abbremsen zu ermöglichen. Während der Ermittlung des Drehwinkelbereichs steuert die Steuereinrichtung 24 den Elektromotor 31 mit einem pulsweitenmodulierten Signal der durch die Batterien 39 gespeisten Motorspannung an. Der Tastgrad dieses Signals wird durch einen aus dem Speicher 33 ausgelesenen vorbestimmten Wert festgelegt, welcher als Werkseinstellungswert in dem Speicher 33 gespeichert ist.

Während der Ermittlung des Drehwinkelbereichs in dem Lernbetrieb misst die Steuereinrichtung 24 in regelmäßigen zeitlichen Abständen die Drehgeschwindigkeit des Rotors des Elektromotors 31, wobei jedem individuellen Messwert der Drehgeschwindigkeit ein individueller Drehwinkelwert zugeordnet wird, welcher die jeweilige Drehstellung des Rotors zum Zeitpunkt der jeweiligen Messung der Drehgeschwindigkeit angibt. Die Steuereinrichtung 24 vergleicht jeden Messwert der Drehgeschwindigkeit mit einem aus dem Speicher 33 ausgelesenen vorbestimmten Sollwert der Drehgeschwindigkeit, bei dem es sich ebenfalls um einen Werkseinstellungswert handeln kann. Die Steuereinrichtung 24 speichert sodann für den jeweiligen Drehwinkelwert in Abhängigkeit von der Höhe der Abweichung der gemessenen Drehgeschwindigkeit von der Soll-Drehgeschwindigkeit einen jeweiligen Wert des Tastgrads ab, welcher bei einer Ansteuerung des Elektromotors 31 im Normalbetrieb zugrunde gelegt wird. Im Ergebnis wird eine Motorsteuersignalkurve aus drehwinkelabhängigen Tastgradwerten in dem Speicher 33 abgelegt, welche im Normalbetrieb zur Ansteuerung des Elektromotors 31 verwendet wird, um eine im Wesentlichen konstante Drehgeschwindigkeit des Rotors über den gesamten Drehwinkelbereich zu erzielen.

Optional kann die Steuereinrichtung 24 in dem Lernbetrieb während einer weiteren Antriebsfahrt des Elektromotors 31 basierend auf der ermittelten und gespeicherten Motorsteuersignalkurve für verschiedene Drehstellungen des Ausgangselements 20 den jeweiligen tatsächlichen Wert der Drehgeschwindigkeit messen und als individuellen Drehgeschwindigkeits-Sollwert in dem Speicher 33 speichern.

Ein nachfolgender Normalbetrieb der Türschlossantriebsvorrichtung 17 kann von dem berechtigten Benutzer durch Betätigung der Funkfernbedienung 26 ausgelöst werden. Hierbei wird beispielsweise ein Öffnungsbefehl von der Funkfernbedienung 26 abgesetzt und von der Steuereinrichtung 24 über die Funkempfangseinrichtung empfangen. Ausgehend von einem verriegelten Zustand des Türschlosses 13 veranlasst die Steuereinrichtung 24 in Ansprechen auf den Öffnungsbefehl den Elektromotor 31 zu einer Antriebsfahrt zwischen den im Lernbetrieb eingelernten Endpositionen, um den Riegel 27 des Türschlosses 13 aus einer Verriegelungsposition in eine Entriegelungsposition zu versetzen und sodann die vorgespannte Falle 29 zurückzuziehen, um das Türschloss 13 zu öffnen.

In diesem Normalbetrieb überprüft die Steuereinrichtung 24 in regelmäßigen zeitlichen Intervallen die Abweichung der tatsächlichen Drehgeschwindigkeit des Ausgangselements 20 (bzw. einer hiermit in fester Drehbeziehung stehenden Komponente) von dem gespeicherten Drehgeschwindigkeits-Sollwert (Werkseinstellungswert oder im Lernbetrieb ermittelter individueller Drehgeschwindigkeits-Sollwert). Sofern der im Rahmen einer Antriebsfahrt ermittelte Mittelwert der Abweichung unterhalb eines unteren Schwellenwertes liegt (Drehgeschwindigkeit zu niedrig), wird die Motorsteuersignalkurve um einen vorbestimmten Korrekturwert (Offset-Wert) angehoben. Sofern die gemittelte Abweichung oberhalb eines oberen Schwellenwertes liegt (Drehgeschwindigkeit ausnahmsweise zu hoch, z.B. nach einem Auswechseln der Batterien 39) wird die Motorsteuersignalkurve um einen vorbestimmten Korrekturwert abgesenkt. Somit kann unter Berücksichtigung der individuellen und alterungsbedingt auch zeitlich veränderlichen mechanischen Widerstandscharakteristik des Türschlosses 13 eine Abweichung der tatsächlichen Drehgeschwindigkeit des Ausgangselements 20 von einer erwünschten Drehgeschwindigkeit minimiert werden.

### Bezugszeichenliste

- 11: Türblatt
- 12: Türgriff
- 13: Türschloss
- 14: Schließzylinder
- 15: Schlüssel
- 17: Türschlossantriebsvorrichtung
- 19: Grundkörper
- 20: Ausgangselement
- 21: Schlüsselkopf
- 22: Elektromechanischer Antrieb
- 24: Steuereinrichtung
- 25: Drehknauf
- 26: Funkfernbedienung
- 27: Riegel
- 29: Falle
- 31: Elektromotor
- 33: Speicher
- 35: Drehwinkelgeber
- 39: Batterie

## Patentansprüche

1. Türschlossantriebsvorrichtung (17) für ein Türschloss (13) einer Haus- oder Wohnungstür (11),
mit einem drehbaren Ausgangselement (20) zum Ankoppeln an ein Eingangselement des Türschlosses (13);
einem Elektromotor (31) zum Antreiben des Ausgangselements (20) zu einer Drehbewegung;
einer Steuereinrichtung (24), die dazu angepasst ist, den Elektromotor (31) zu einer Antriebsfahrt anzusteuern; und
einem nicht-flüchtigen Speicher (33);
**dadurch gekennzeichnet,**
**dass** die Türschlossantriebsvorrichtung (17) eine Sensoranordnung (35) zum Erfassen eines Drehgeschwindigkeits-Istwerts aufweist, der eine aktuelle Drehgeschwindigkeit des Ausgangselements (20) repräsentiert;
wobei die Steuereinrichtung (24) ferner dazu angepasst ist, während einer Antriebsfahrt des Elektromotors (31) in einem Normalbetrieb den erfassten Drehgeschwindigkeits-Istwert mit einem Drehgeschwindigkeits-Sollwert zu vergleichen, der in dem Speicher (33) gespeichert ist und der eine erwünschte Drehgeschwindigkeit des Ausgangselements (20) repräsentiert, und im Falle einer Abweichung des Drehgeschwindigkeits-Istwerts von dem Drehgeschwindigkeits-Sollwert die Ansteuerung des Elektromotors (31) in Abhängigkeit von der Höhe der Abweichung anzupassen.

2. Türschlossantriebsvorrichtung (17) nach Anspruch 1,
wobei die Steuereinrichtung (24) dazu angepasst ist, den Elektromotor (31) gemäß einem Motorsteuersignal anzusteuern, welches die Höhe einer Energiezufuhr an den Elektromotor (31) beeinflusst.

3. Türschlossantriebsvorrichtung (17) nach Anspruch 2,
wobei das Motorsteuersignal einen Tastgrad einer Pulsweitenmodulation einer Motorspannung repräsentiert.

4. Türschlossantriebsvorrichtung (17) nach zumindest einem der vorstehenden Ansprüche,
wobei die Steuereinrichtung (24) dazu angepasst ist, in dem Normalbetrieb den Elektromotor (31) im Sinne einer im Wesentlichen konstanten Drehgeschwindigkeit anzusteuern.

5. Türschlossantriebsvorrichtung (17) nach zumindest einem der vorstehenden Ansprüche,
wobei die Steuereinrichtung (24) ferner dazu angepasst ist, während der Antriebsfahrt des Elektromotors (31) in dem Normalbetrieb den für verschiedene Drehstellungen des Ausgangselements (20) erfassten jeweiligen Drehgeschwindigkeits-Istwert mit dem Drehgeschwindigkeits-Sollwert zu vergleichen.

6. Türschlossantriebsvorrichtung (17) nach zumindest einem der vorstehenden Ansprüche,
wobei in dem Speicher (33) für verschiedene Drehstellungen des Ausgangselements (20) individuelle Drehgeschwindigkeits-Sollwerte gespeichert sind, wobei die Steuereinrichtung (24) ferner dazu angepasst ist, während der Antriebsfahrt des Elektromotors (31) in dem Normalbetrieb den für verschiedene Drehstellungen des Ausgangselements (20) erfassten jeweiligen Drehgeschwindigkeits-Istwert mit dem der jeweiligen Drehstellung des Ausgangselements (20) entsprechenden individuellen Drehgeschwindigkeits-Sollwert zu vergleichen.

7. Türschlossantriebsvorrichtung (17) nach Anspruch 6,
wobei die Steuereinrichtung (24) dazu angepasst ist, in dem Normalbetrieb den Elektromotor (31) für die verschiedenen Drehstellungen des Ausgangselements (20) in Abhängigkeit von der Höhe der Abweichung des jeweiligen Drehgeschwindigkeits-Istwerts von dem individuellen Drehgeschwindigkeits-Sollwert anzusteuern.

8. Türschlossantriebsvorrichtung (17) nach zumindest einem der Ansprüche 1 bis 6,
wobei die Steuereinrichtung (24) dazu angepasst ist, in dem Normalbetrieb im Falle einer Abweichung des Drehgeschwindigkeits-Istwerts von dem Drehgeschwindigkeits-Sollwert die Ansteuerung des Elektromotors (31) für die gesamte Antriebsfahrt gleichartig anzupassen.

9. Türschlossantriebsvorrichtung (17) nach zumindest einem der vorstehenden Ansprüche,
wobei die Steuereinrichtung (24) dazu angepasst ist, in dem Normalbetrieb im Falle einer Abweichung des Drehgeschwindigkeits-Istwerts von dem Drehgeschwindigkeits-Sollwert wenigstens einen Korrekturwert, der die Höhe der Abweichung repräsentiert, in dem Speicher (33) zu speichern, und in einer nachfolgenden Antriebsfahrt des Elektromotors (31) den gespeicherten Korrekturwert der Ansteuerung des Elektromotors (31) zugrunde zu legen.

10. Türschlossantriebsvorrichtung (17) nach zumindest einem der vorstehenden Ansprüche,
wobei die Sensoranordnung (35) wenigstens einen Drehstellungsdetektor umfasst, der eine absolute Drehstellung oder eine relative Drehstellungsänderung des Ausgangselements (20) oder eines Rotors des Elektromotors (31) detektiert;
wobei die Steuereinrichtung (24) vorzugsweise dazu angepasst ist, auf Grundlage der detektierten Drehstellung oder relativen Drehstellungsänderung und auf Grundlage eines Zeitmesssignals den DrehgeschwindigkeitsIstwert zu ermitteln.

11. Türschlossantriebsvorrichtung (17) nach zumindest einem der vorstehenden Ansprüche,
wobei die Steuereinrichtung (24) ferner dazu angepasst ist, während wenigstens einer Antriebsfahrt des Elektromotors (31) in einem Lernbetrieb für verschiedene Drehstellungen des Ausgangselements (20) den jeweiligen Drehgeschwindigkeits-Istwert zu erfassen und für die verschiedenen Drehstellungen des Ausgangselements (20) individuelle Motorsteuersignale zu ermitteln, die einer gewünschten Drehgeschwindigkeit des Ausgangselements (20) entlang der gesamten Antriebsfahrt entsprechen; wobei die Steuereinrichtung (24) ferner dazu angepasst ist, in dem Normalbetrieb den Elektromotor (31) gemäß den ermittelten Motorsteuersignalen anzusteuern.

12. Türschlossantriebsvorrichtung (17) nach Anspruch 11,
wobei die Steuereinrichtung (24) dazu angepasst ist, in dem Lernbetrieb die individuellen Motorsteuersignale für die verschiedenen Drehstellungen des Ausgangselements (20) dadurch zu ermitteln, dass der erfasste jeweilige Drehgeschwindigkeits-Istwert mit einem vorbestimmten Sollwert verglichen wird und ein jeweiliger Steuersignal-Werkseinstellungswert in Abhängigkeit von dem Vergleichsergebnis einmalig oder iterativ im Sinne einer Angleichung des erfassten jeweiligen Drehgeschwindigkeits-Istwerts an den vorbestimmten Sollwert angepasst wird;
und/oder
wobei die Steuereinrichtung (24) dazu angepasst ist, die in dem Lernbetrieb für die verschiedenen Drehstellungen des Ausgangselements (20) ermittelten individuellen Motorsteuersignale in dem Speicher (33) zu speichern.

13. Türschlossantriebsvorrichtung (17) nach Anspruch 11 oder 12,
wobei die Steuereinrichtung (24) ferner dazu angepasst ist, in dem Lernbetrieb während einer weiteren Antriebsfahrt des Elektromotors (31) für verschiedene Drehstellungen des Ausgangselements (20) den jeweiligen Drehgeschwindigkeits-Istwert zu erfassen und als individuellen Drehgeschwindigkeits-Sollwert in dem Speicher (33) zu speichern;
und/oder
wobei die Steuereinrichtung (24) ferner dazu angepasst ist, in dem Lernbetrieb wenigstens eine Drehstellung des Ausgangselements (20) zu ermitteln, die einem mechanischen Anschlag entspricht und die eine Endposition der Antriebsfahrt des Elektromotors (31) bildet.

14. Türschlossantriebsvorrichtung (17) nach zumindest einem der Ansprüche 11 bis 13,
wobei die Steuereinrichtung (24) ferner dazu angepasst ist, in dem Lernbetrieb eine Drehstellung des Ausgangselements (20) zu ermitteln,
- in der ein Riegel (29) eines mit dem Ausgangselement (20) gekoppelten Türschlosses (13) vollständig aus dem Türschlosses ausgefahren ist, und/oder
- in der ein Riegel (29) eines mit dem Ausgangselement (20) gekoppelten Türschlosses (13) vollständig in einen Innenbereich des Türschlosses (13) versetzt ist und eine federvorgespannte Falle (29) des Türschlosses (13) aus dem Innenbereich des Türschlosses (13) herausragt, und/oder
- in der ein Riegel (29) eines mit dem Ausgangselement (20) gekoppelten Türschlosses (13) vollständig in einen Innenbereich des Türschlosses (13) versetzt ist und eine federvorgespannte Falle (29) des Türschlosses (13) in den Innenbereich des Türschlosses (13) zurückgezogen ist;
und/oder
wobei die Steuereinrichtung (24) ferner dazu angepasst ist, in dem Lernbetrieb eine erste und eine zweite Drehrichtung des Ausgangselements (20) zu ermitteln, wobei durch eine Drehung des Ausgangselements (20) in die erste Drehrichtung ein Öffnen eines mit dem Ausgangselement (20) gekoppelten Türschlosses (13) bewirkt wird, und wobei durch eine Drehung des Ausgangselements (20) in die zweite Drehrichtung ein Schließen des Türschlosses (13) bewirkt wird.

15. Türschloss (13) mit einem Schließzylinder und einer Türschlossantriebsvorrichtung (17) nach zumindest einem der vorstehenden Ansprüche,
wobei das Ausgangselement (20) der Türschlossantriebsvorrichtung (17) mit einem Eingangselement des Schließzylinders (14) direkt oder über einen zugeordneten Schlüssel (15) indirekt antriebswirksam gekoppelt ist.
